(19) Europäisches Patentamt
European Patent Office
Office européen des brevets

(11) **EP 3 493 635 B1**

(12) **EUROPEAN PATENT SPECIFICATION**

(45) Date of publication and mention
of the grant of the patent:
**25.11.2020 Bulletin 2020/48**

(51) Int Cl.:
**H04W 72/12** *(2009.01)* **H04W 88/06** *(2009.01)*

(21) Application number: **17205192.2**

(22) Date of filing: **04.12.2017**

(54) **A METHOD FOR MULTI-RADIO COEXISTENCE**

VERFAHREN ZUR MEHRFUNKKOEXISTENZ

PROCÉDÉ POUR LA COEXISTENCE DE MULTIPLES RADIOS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.06.2019 Bulletin 2019/23**

(73) Proprietor: **Stichting IMEC Nederland
5656 AE Eindhoven (NL)**

(72) Inventor: **Zand, Pouria
3001 Leuven (BE)**

(74) Representative: **Patent Department IMEC
IMEC vzw
Patent Department
Kapeldreef 75
3001 Leuven (BE)**

(56) References cited:
**US-A1- 2010 322 287**

• **CARHACIOGLU ONUR ET AL: "Time-domain
cooperative coexistence of BLE and IEEE
802.15.4 networks", 2017 IEEE 28TH ANNUAL
INTERNATIONAL SYMPOSIUM ON PERSONAL,
INDOOR, AND MOBILE RADIO
COMMUNICATIONS (PIMRC), IEEE, 8 October
2017 (2017-10-08), pages 1-7, XP033321157, DOI:
10.1109/PIMRC.2017.8292262 ISBN:
978-1-5386-3529-2 [retrieved on 2018-02-14]**

**EP 3 493 635 B1**

**Description**

**Technical field**

The present inventive concept relates to a method for a multi-radio co-existence.

**Background**

Various low-power wireless technologies such as IEEE 802.15.4, Bluetooth and Bluetooth Low Energy (BLE) have been developed. The globally allowable operational band for these technologies is the unlicensed 2.4 GHz ISM band, which is also used by other wireless technologies such as IEEE 802.11. The result is cross-technology interference that affects the QoS of the network, particularly its reliability and latency, which may in turn lead to application failure. To support these technologies, multiple radios each operating using a specific technology are being integrated on the same device, typically referred to as a multi-radio device. Achieving coexistence of these collocated wireless technologies is a major challenge.

Spectrum management (or coexistence) between different wireless technologies are classified into three domains: space, time and frequency. Coexistence can thus be achieved if the following conditions are in place:

- sufficient frequency separation between the networks.

- sufficient physical distance between the wireless networks; and

- controlled time-sharing of the channel between the networks;

Spectrum management (or coexistence) mechanism are classified into two categories: cooperative and non-cooperative, depending on whether a central coordinator orchestrates their use of the spectrum or the involved networks operate independently of one another. In cooperative coexistence, all networks collaborate their use of the spectrum. In non-cooperative coexistence, each network treats the other networks present as interference and performs interference mitigation.

Carhacioglu et al, in their publication Time-Domain Cooperative Coexistence of BLE and IEEE 802.15.4 Networks, published in the IEEE 28th Annual Symposium PIMRC, propose and develop a cooperative mechanism for the coexistence of co-located IEEE 802.15.4 and BLE networks in the time domain. This mechanism tries to avoid overlap of communications in these networks in order to decrease the chance of Cross-Technology Interference (CTI) and thus packet drops.

US 2010/0120362 A1 describes a method and system for managing operations of collocated BLE interfaces and/or other radio interfaces in a wireless device. Interference among the radio interfaces is mitigated by communicating operating parameters between the BLE interfaces and the other radio interfaces and configuring the respective radio interfaces based on the communicated operating parameters. The operating parameters may comprise adaptive frequency hopping (AFH) maps which may be adjusted as needed to prevent use of common and/or used radio channels. AFH maps are created by an arbitration block which in case of interference may reschedule the communications of the radios based on their priority. Alternatively, the arbitration block may modify the AFH maps so that both radios may transmit without interfering each other.

US 2010/0322287 A1 describes a method for a multi-radio coexistence. A co-existence apparatus is proposed which collects and analyses the usage information of the collocated radios and non-collocated radios. Based on this information the co-existence apparatus creates a time and frequency mask for use by the lowest priority radio to reduce interference when other collocated and/or non-collocated technologies perform scanning or data transmission.

**Summary**

An objective of the present invention is to provide an effective solution to mitigate coexistence problems among collocated and non-collocated radios in a wireless network.

According to an aspect of the present inventive concept there is provided a method for determining communication parameters comprising a time and frequency hopping pattern for a mobile communication device comprising a first radio module communicating with a communication device in compliance with a first protocol, a second radio module communicating with a communication device in compliance with a second protocol, and a radio manager, the method comprising:

- receiving, in the radio manager, communication parameters from a first radio module;

2

- receiving, in the radio manager, communication parameters from a second radio module;
- determining a minimum time slot (Tmin) and a minimum frequency band (Fmin) based on the received communication parameters,
- deriving, in the radio manager, communication parameters for a communication requested from the at least one of the radio modules based on the communication parameters of the radio module requesting communication and the determined minimum time slot (Tmin) and the minimum frequency band (Fmin), and
- forwarding, by the radio manager, the derived communication parameters to the radio module requesting communication.

By devising a method which takes into account the channel hopping pattern of the radios and their communication period, a scheduling matrix can be created. This allows the multi-radio to coordinate the operation of both collocated and non-collocated radios.

According to an embodiment the derived communication parameters comprise channel hopping pattern and communication period. The latter include a communication window, a frequency band, a number of communication windows per communication cycle, a number of frequency channels and a hopping pattern.

According to an embodiment, the minimum time slot (Tmin) is derived based on greatest common divisor (GCD) of the time window or the time interval of the received communication parameters, and the minimum frequency band (Fmin) is derived based on greatest common divisor (GCD) of the frequency band, number of channels, channel bandwidth or channel offset of the received communication parameters.

According to an embodiment, the step of determining further comprises creating a scheduling matrix with a unit cell having a unit width (Wo) equal to minimum time slot (Tmin) and a unit height (Ho) equal to minimum frequency band (Fmin).

According to an embodiment, the communication parameters of the requested communication are recorded in the scheduling matrix by allocating corresponding unit cells as communication slots for the radio module requesting communication. The width and height of each communication (window and channel) in calculated based on unit cell width (Tmin) and unit cell height (Fmin).

The communication window is the time duration within which a communication between two radios of same technology is performed and defines the start and the end of the communication. The minimum communication time slot is the greatest common divisor (GCD) of the communication windows of the first and second radios. The communication window of a radio may thus be equivalent to a minimum time slot or to multiple of it.

The communication channel is the frequency band within which the communication between two radios of same technology is performed. The minimum communication frequency band is the greatest common divisor (GCD) bandwidth of the communication channels of the first and second radios. The channel communication bandwidth of a radio may thus be equivalent to a minimum frequency band or to multiple of it.

The radio manager records a communication by labeling multiple unit cells based on the size of that communication in time and frequency domain. For example, a communication window can be 2*Tmin and communication channel can be 3*Fmin. Accordingly, the radio manager will calculate and label the unit cells for the next cycles for both radios in scheduling matrix.

According to an embodiment, the step of determining further comprises labelling a unit cell as an overlapping cell, if communications of the radio modules are to overlap or are to interfere within a unit cell's corresponding time slot and frequency band and to adjust the communication parameters or to disable communication via one or both radio modules. That is, if the times at which the radio modules are to transmit overlap and/or if the frequencies at which they transmit are close enough to each other, if not the same frequency, then there may be interference between the signals transmitted by the radio modules. In such case, the unit cell(s) corresponding to the time slot and frequency band is labelled as an overlapping cell. Accordingly, the radio manager will modify any of the communication parameters of one or both radios.

According to an embodiment, the step of deriving communication parameters comprises evaluating an objective function, wherein the objection function takes into account a channel rejection, reliability, a latency and/or a concurrent communication constraints.

According to an embodiment, the objective function takes into account the radio modules priority.

According to an embodiment, the objective function takes into account statistics information derived based on monitoring one or more communications via one or both radio modules.

According to an embodiment, the first and second radio operate in the 2.4 GHz ISM band. Alternatively, the radio may operate in 5 GHz ISM band or sub-1 GHz ISM frequency band such as 868 MHz and 915 MHz. For example, TSCH and DSME MAC protocols can work in sub-1 GHz band in compliant with IEEE802.15.4g standard.

According to an embodiment, either or both first and the second protocols are compliant with Time Synchronized Channel Hopping (TSCH), DSME, WirelessHART, ISA 100.11a, Bluetooth and Bluetooth Low Energy (BLE).

According to a second aspect, the invention relates to a computer program product comprising computer-executable instructions for performing the method according to the first aspect when the program is run on a computer.

According to a third aspect, the invention relates to a computer readable storage medium comprising the computer program product according to the second aspect.

Further aspects of the invention relate to a radio manager for a mobile communication device comprising a first radio module communicating with a communication device in compliance with a first protocol, a second radio module communication with a communication device in compliance with a second protocol, wherein the radio manager is arranged to perform the method according to the present invention as well as to a mobile communication device comprising such radio manager.

## Brief description of the drawings

For a better understanding of the present disclosure, some exemplary embodiments are described below in conjunction with the appended figures, wherein:

FIG. 1 illustrates an example of a multi-radio device according to the present disclosure.

FIG. 2 illustrates another example of a multi-radio device according to the present disclosure.

FIG. 3 illustrates a wireless communication network comprising the multi-radio device of FIG. 1.

FIG. 4 illustrates a scheduling of a TSCH communication according to the present disclosure.

FIG. 5 illustrates a scheduling of a BLE communication according to the present disclosure.

FIG. 6 illustrates a first example of the scheduling matrix according to the present disclosure with a number of unit cells reserved for communication.

FIG. 7 illustrates a message sequence diagram of BLE alignment to TSCH slotframe.

FIG. 8 illustrates a message sequence diagram of TSCH alignment to BLE connection interval.

FIG. 9 illustrates a second example of the scheduling matrix according to the present disclosure with a number of unit cells reserved for communication.

FIG. 10 illustrates a third example of the scheduling matrix according to the present disclosure with a number of unit cells reserved for communication.

FIG. 11 illustrates two wireless communication networks as in FIG. 3.

FIG. 12 illustrates a fourth example of the scheduling matrix according to the present disclosure with a number of unit cells reserved for communication and a number of blacklisted unit cells.

FIG. 13 illustrates a message sequence diagram of rescheduling of communication upon reception of report/statistics or new bandwidth request.

FIG. 14 illustrates a multi-radio comprising a dual mode-radio module using one antenna.

## Detailed description

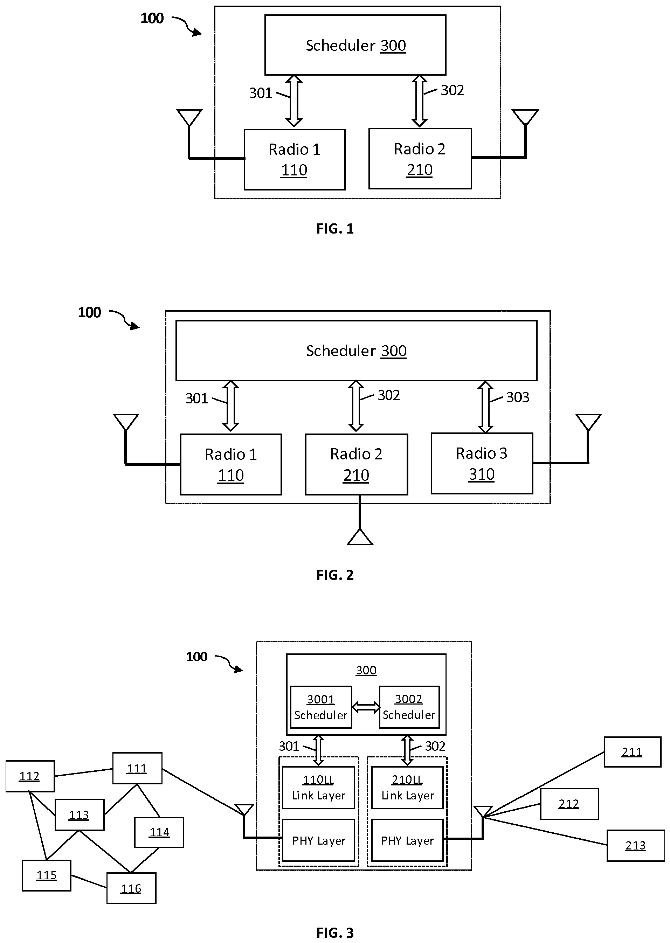

**FIG. 1** is a schematic block diagram of a multi-radio device 100 which includes at least a first radio 110 arranged to communicate using a first communication protocol in compliant with a IEEE 802.15.4 technology standard, such as time slotted channel hopping (TSCH), WirelessHART or ISA100.11a, and a second radio 210 arranged to communicate using a second communication protocol such as Bluetooth or Bluetooth Low Energy (BLE) in connection-oriented or connection-less mode with the role of central or broadcaster, respectively. **FIG. 2** shows another example of a multi-radio device 100 comprising three collocated radios. In these case, two of the radios are IEEE 802.15.4 standard based, e.g. TSCH 110 and WirelessHART 210, and the third one is BLE radio 310.

For simplicity, the invention will be described in more details below with reference to the multi-radio of **FIG. 1.** According to the invention, the collocated radios 110 and 210 operate using an adaptive time and/or frequency hopping however the allocation of the communication channels, communication windows and the hopping pattern of the radios may differ significantly.

For example, the BLE protocol is a packet-based protocol with four specific Broadcaster, Observer, Peripheral, and Central roles as well as two ways for communication: connection-oriented and connection-less. In connection-oriented mode, the BLE master has a central role and the BLE slave that is less complex has a peripheral role. In the connection-less mode, the broadcaster node periodically advertises data and the observer node receives those advertisements. It is an enhance standard Bluetooth protocol which operates at 2.4 GHz ISM band and divides the wireless channel in frequency (for example, 40 channels with channel bandwidth, $ch_{BW}$, of 2 MHz and with no channel space). It uses an adaptive frequency hopping (AFH) mechanism to switch channel in case of interference and/or propagation issues. According to the standard, a BLE slave radio can establish a single connection (i.e. it can connect to a master radio), while a BLE master can manage multiple concurrent connections with different slaves. Once a connection between a master and a slave is established, both radios can start exchanging information during a so-called connection interval within which information is exchanged periodically. The communication between a BLE master and slave is referred to as a connection event. Depending on the amount of data to be exchanged, one or more connection events, e.g. 5 or 7 events, may be established between the master and slave. The time between consecutive connection events which defines the period within which communication occurs is in the range between 7.5 ms and 4 s (with increments of 1.25 ms). For each connection event a different frequency channel is used which is defined by the BLE frequency hopping mechanism.

In contrast to BLE, the TSCH protocol uses a slotted mechanism. TSCH protocol divides the wireless channel in time and frequency. Time is divided into slotframes which consists of a collection of discrete time slots (for example, one slotframe may have 10 time slots) and frequency is divided into 16 channels in 2.4 GHz (for example, 16 frequency channels with $ch_{BW}$ = 2 *MHz* bandwidth and with channel space, $ch_{SP}$, of 3 MHz). A communication between TSCH radios occurs once in every slotframe within a specific time slot and a specific channel. TSCH uses an adaptive hopping mechanism in both time and frequency which allows a TSCH radio to switch to a different timeslot and/or frequency channel in subsequent slotframes.

If radio 110 uses TSCH protocol, it may start operation at a frequency channel of 2405MHz using a communication window of 10 ms and hop in time and frequency as follows:

$$t_{i+1} = t_i + \text{communication-cycle} \qquad (1)$$

$$f_{j+1} = [\Delta t * \text{hop} \% (\text{number-of-channels})] + f_j \qquad (2)$$

Where in TSCH, $t_i$ is the time slot for the current slotframe, $t_{i+1}$ is the time slot for the subsequent slotframe, number of channel is 16 for TSCH, communication-cycle is period of communication (slotframe for TSCH), $\Delta t$ is equal to number of timeslot between two communication windows, *hop* is the channel hopping number that is 1 for TSCH, and, $f_j$ and $f_{j+1}$ are the frequency channel for the current and subsequent slotframe respectively. The TSCH channel list is assumed to be [11, 12, 13, 14, ..., 26]. If radio 210 operates using BLE protocol and it has the central role in connection-oriented more, it may start operation at a frequency channel of 2404 MHz using a communication cycle of n*10 ms and hop e.g. 10 MHz in frequency between consecutive communications. The period of communication for BLE is defined by the connection interval. The next communication window (i.e. next BLE connection event) will start after the BLE connection interval at the frequency channel as defined in Equation (2). The frequency channel for the next communication can be defined as where $f_j$ is the frequency channel for the current communication, $f_{j+1}$ is the frequency channel for the subsequent communication, *hop* is the hopping parameter which ranges from 5 to 16 and the number-of-channels is equal to 37. The following list shows the BLE channel sequence [0, 1, 2, 3, ..., 36]. For BLE, $\Delta t$ is equal to number of communication-cycles between two communication-windows. Clearly, the time and frequency allocation of the BLE and TSCH communications are significantly different.

The multi-radio 100 further comprises a radio manager 300 which is arranged for scheduling the communications of the first radio 110 and second radio 210 as detailed below. The radio manager is a processing unit, such as a microcontroller. The radio manager 300 is arranged to exchange usage information with the radio modules 110 and 210 collocated in the multi-radio 100 through connections 301 and 302 and in turn to produce a time and frequency dimensioned scheduling for each radio as detailed below.

FIG. 3 is a schematic block diagram of a wireless communication network comprising the multi-radio 100 of FIG. 1 and a plurality of remote (non-collocated) radio devices. Non-collocated radios 111-116 operate using the same protocol as the first radio module 110 while non-collocated radios 211-213 operate using the protocol of the second radio module 210. Following the example scenario of FIG. 1, the first set of non-collocated radios 111-116 may operate using TSCH protocol and the second set of non-collocated radios 211-213 will operate using BLE Connection-Oriented protocol.

Generally speaking, a radio accesses a wireless network via a network stack which comprises a data link layer for the exchange of data with one or more remote radio devices. In **FIG. 3**, the link layer 110LL and 210LL of the respective radio modules are shown instead of the whole radio module to illustrate how a radio module exchanges data with other radios in a network. As described above, the first radio 110 accesses the wireless network via its link layer 110LL for the exchange of data with one or more remote radio devices 111-116. Similarly, the second radio 210 accesses the wireless network via its link layer 210LL for the exchange of data with one or more radio devices 211-213. The two link layers 110LL and 210LL handle the MAC / data link layer functionalities of the respective radio module. For example, link layer 110LL (i.e. TSCH MAC layer) handles constructing the TSCH packets, keeping the list of links and slotframes, sending periodic enhanced beacons (EBs), and sending the data messages in the scheduled timeslots. Similarly, the link layer 210LL (or BLE controller) handle constructing the BLE messages, scanning for reception of advertisement from potential slaves, and sending the data packets in scheduled connection events.

As described above, the radio manager 300 is arranged to exchange usage information with link layer 110LL and 210LL through connections 301 and 302 and to produce a time and frequency dimensioned scheduling for each radio. This allows the radio manager to control the operation of the collocated radio modules in accordance with this usage information.

The usage information comprises radio's 110 and 210 communication parameters. Depending on the technology used by the radio module 110 and 210 the communication parameters may comprise information about the communication channels, communication window and adaptive time and frequency hopping for current and future radio's activity. The communication parameters may also include parameters such as frequency usage information, medium access control (MAC)-level timing information and hardware interface information. The frequency usage information includes an advance frequency hopping (AFH) channel map with a particular hopping sequence and AFH switch instant. Hardware interface information allows the radio to exchange information about priority and when they are active or inactive. Based on the usage information received by the radio manager, the radio manager may create part or all the link layer communication links and then write them to link layer module 110LL and 210LL of the respective radio. For the example above, the radio manager 300 will use MLME-SET-LINK command to add a new link in link layer 110LL of radio 110. The radio manager is also arranged to retrieve from link layer 110LL and/or 210LL, a list of any pre-set or existing communication links between any collocated and/or non-collocated radios.

Additionally, the radio manager may also be responsible for scheduling the communication between non-collocated radios within the wireless network. This allows the manager to have an overall knowledge about the schedule of the communications in the two networks as a whole. For example, in TSCH network, the radio manager schedules the communication between non-collocated radios 112 and 113. The radio manager then may use application protocol (e.g., Constrained Application Protocol (CoAP)) to forward these new scheduled/labeled cells to those non-collocated radios. These new communications will be added in the link/cell table at 112LL and 113LL. The multi-radio 100 thus acts as a master device and coordinates the operation of collocated and non-collocated radios in the wireless network with the help of the radio manager. For example, the radio manager 300 and the respective collocated radio, e.g. TSCH 110, will together coordinate the operation of the TSCH network, while the radio manager and the other collocated radio, i.e. BLE radio 210, will act as a BLE master to control the operation of the BLE network.

In one embodiment, the radio manager 300 comprises a first radio manager 3001 (e.g., TSCH 6top) and a second radio manager 3002 (e.g., BLE master Host). In another embodiment, the radio manager 300 maybe be part of a multi-radio device controller. Alternatively, the radio manager may be part of a collocated radio module. If, for example, being part of the first radio module 110, the radio manager needs to be able to exchange usage information with the link layer of the other radio module, e.g. 210, to be able to control the communications of both radio networks. The functionality of the radio manager will be now described in more detail below with reference to a number of different examples.

Based on the received communication parameters the radio manager is able to determine a minimum time slot, Tmin, and a minimum frequency band, Fmin. The minimum time slot, Tmin, is derived based on a greatest common divisor of the communication window of communication protocol of the collocated radios, i.e.

$$\text{Tmin} = \text{GCD (communication-window A, communication-window B)} \qquad (3)$$

where A and B indicate the communication protocol used by a respective collocated radio. For protocols where the communication window is not specified, the communication cycle can be used instead.

The minimum frequency band, Fmin, is derived based on a greatest common divisor of the frequency channel bandwidth ($ch_{BW}$), frequency channel offset ($ch_{offset}$) and distance between channels ($ch_{space}$) of the received communication parameters. That is,

$$\text{Fmin} = \text{GCD} \left( \text{ch}_{BW} A, \text{ch}_{BW} B, \text{ch}_{space} A, \text{ch}_{space} B, \text{ch}_{offset} A, \text{ch}_{offset} B \right) \qquad (4)$$

The minimum time slot and the minimum frequency band are also referred to as a unit time slot and a unit frequency band (or channel). The derivation of a unit slot and a unit channel allows for scheduling communications between collocated and non-collocated radios using the significantly different communication channels, communication windows and time and frequency hopping pattern to be aligned in time and frequency. Aligning in time and frequency means each communication is mapped to a unit time slot and a unit channel which allows for easy tracking of current and future scheduled communications. Thus, coexistence problems can be mitigated as detailed below.

When the manager 300 receives a request for a communication from a collocated radio module, the manager sends back communication parameters to that radio module. The communication parameters include: start of communication, communication window, frequency channel and hopping sequence which are derived based on the determined unit time slot, Tmin, and the unit frequency channel, Fmin. The communication parameters thus define at what time the collocated radio should start communicating and which unit time slot(s) and unit frequency channel(s) the collocated radio should use for the requested and any future communications.

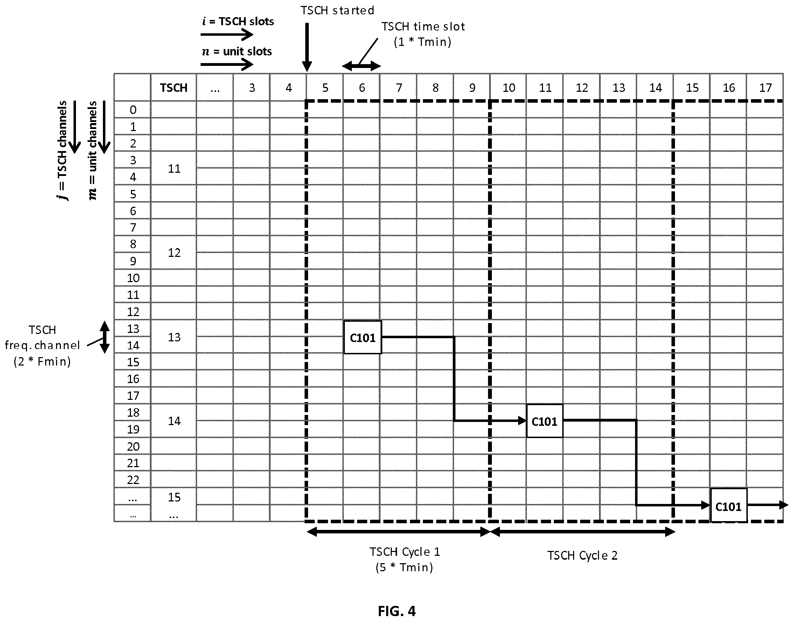

For a collocated TSCH radio, the communication parameters include a time slot, $T_{TSCH}$, a frequency channel, $F_{TSCH}$, and a hopping sequence. **FIG. 4** shows a scheduling example of a TSCH communication C101 between radios 110 and 111 scheduled to start at TSCH time slot i=6 and TSCH frequency channel j=13. The TSCH time slot is equivalent to one unit time slot, i.e. $T_{TSCH}$ = Tmin and n=6, the TSCH frequency channels is equivalent to two unit frequency bands, $F_{TSCH}$ = 2Fmin and m=13-14, and the hopping sequence is as defined in Equations (1) and (2). For TSCH in Equation (1) the communication-cycle parameter is equal to slotframe size and in Equation (2), the hop number is equal to 1 and number of channels is equal to 16, considering TSCH operates in the 2.4GHz band. For this TSCH communication C101, the radio manager will allocate one unit time slot with index n=6 and two-unit frequency channels with index m=13-14. Consecutive TSCH communications in subsequent slotframes are scheduled according to the TSCH hopping sequence. In the illustrated example, it hops 5 TSCH time slots and 1 TSCH frequency channel; the TSCH communications are scheduled in time slots i=6, 11, 16, ... and frequency channels j=13, 14, 15... The TSCH slotframe is equal to 5 unit cells.

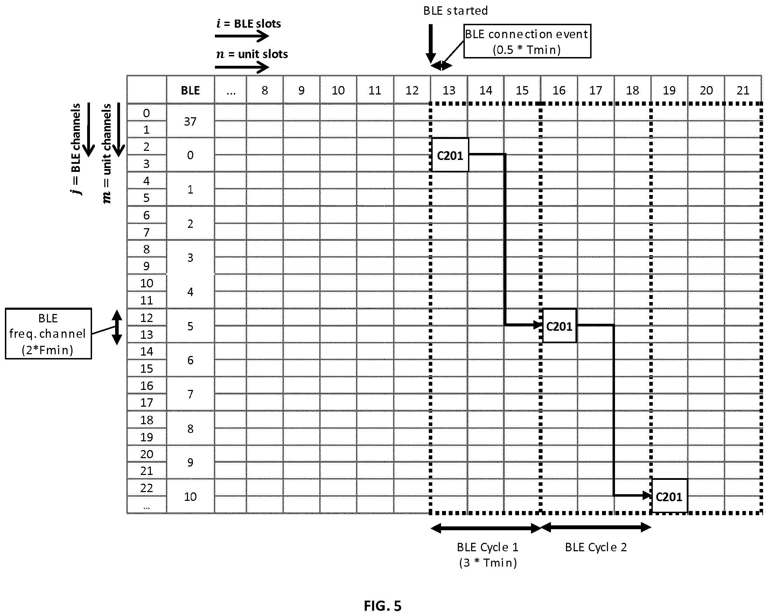

For a collocated BLE radio, the communication parameters will include a time slot, $T_{BLE}$, a frequency channel, $F_{BLE}$, and a hopping sequence. **FIG. 5** shows a scheduling of a BLE communication C201 between radios 210 and 211 scheduled to start at BLE communication window (or connection event) i=13 and BLE frequency channel j=0. The BLE communication window is $T_{BLE}$ = 0.5Tmin and n=13, the BLE frequency channels is $F_{BLE}$ = 2Fmin and m=12 and 13, and the hopping sequence is as defined in Equations (1). For BLE in Equation (1) the cycle is equal to connection interval and in Equation (2), the hop number can be equal to [5 ... 16] and number of channels is equal to 37. In this case, the radio manager will allocate one unit time slots and two unit frequency channels as shown in the figure. Consecutive BLE communications are scheduled according to the hopping sequence. In the illustrated example, it will hop 2 BLE time slots and 5 BLE frequency channels; the BLE communications C201 are scheduled in time slots i=13, 16, 19, ... and frequency channels j=0,5,10... The BLE communication window is equal to 3 unit cells.

To manage the scheduled communication, the radio manager 300 may create a scheduling matrix with a unit cell with a unit width, Wo, equal to unit time slot, Tmin, and a unit height, Ho, equal to unit frequency band, Fmin, in which table the communication parameters of the requested communications are recorded. Recoding means that respective unit cells, be it one or more, are reserved as communication slots for the collocated and non-collocated radios requesting communication. The radio manager thus translates the received communication parameters into labeled unit cells in the scheduling matrix.

In addition to the current communication also future communication will be recorded in the scheduling matrix in accordance with the hopping sequence. The radio manager will calculate the upcoming communications in next communication cycles and it will label the respective unit cells to reserve those cells. For each scheduled communication, the radio manager may reserve unit cells for a number of subsequent communication cycles, for example, in the range of hundreds or even thousands of subsequent cycles. For a communication cycle of 100ms, it is preferred to reserve unit cells for up to several hundred subsequent cycles, if needed to consider the manager's memory requirements.

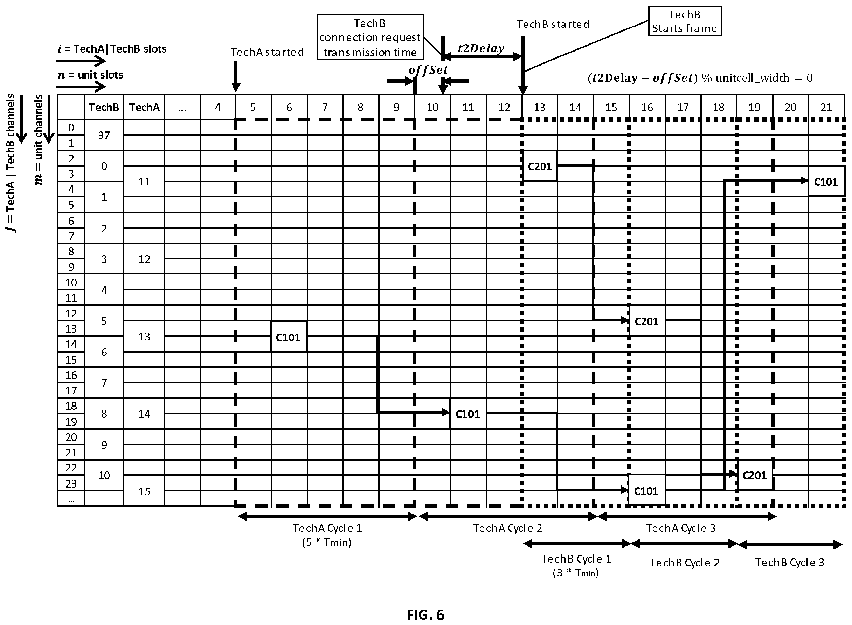

The scheduling matrix can be implemented as a look-up table (LUT) where the value stored in the cell of the LUT indicates which unit time slot(s) and frequency band(s) are used by collocated and/or non-collocated radio for a respective communication. The unit time slot and frequency band define an unit cell in the scheduling matrix to which a communication is allocated and the indexes identifying the cell correspond to the timeslot and frequency channel at which the respective communication is carried out. An empty scheduling matrix is shown in **FIG. 6.** The allocation of unit slots and unit channels is dependent on the technology used by the radios in the wireless network. For example, for radios using technology A, TechA, the 1st communication channel may correspond to 3rd and 4th unit channels and so on. For radios using technology B, TechB, its 1st channels may correspond to 2nd and 3rd unit channels and so in. The communication between radios using TechA a communication time slot may correspond to 1 unit slot, while for radios using TechB the communication time slot may correspond to 2 unit slots.

**FIG. 6** shows a scheduling matrix showing unit cells allocated for the scheduled BLE and TSCH communication of **FIG. 4** and **FIG. 5** respectively. In this example, communication C101 between radio 110 and 111 has started before communication C201 between radios 210 and 211. In the illustrated example, a communication C101 is communication between TSCH coordinator 110 and TSCH node 111 and communication C201 between BLE master 210 and BLE slave 211. To assure proper coexistence operation, the radio manager 300 thus schedules the start of BLE communication aligned with a TSCH time slot. The communications C101 and C201 are scheduled with sufficient spacing in time and/or frequency so that there is no collision or interference between them.

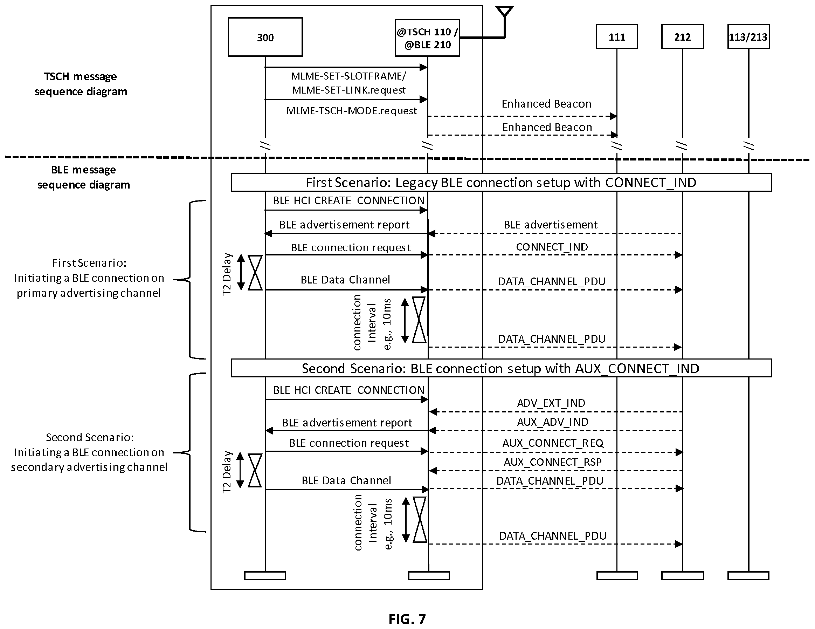

In this example, the BLE master starts a connection interval with an anchor point aligned in time with the start of a TSCH timeslot. The scheduling of the communications will be explained with reference to **FIG. 7** which shows the message sequence diagram between the radio manager 300 and the collocated radio modules 110 or 210 as well as the message sequence diagram between collocated and non-collocated radios, i.e. radios 111 and 212. The radio manager starts the TSCH network by sending the MAC Layer Management Entity (MLME)-TSCH-MODE request to the MAC layer 110LL of the TSCH collocated radio after which the TSCH radio 110 starts to broadcast the Enhanced Beacon (EB) to advertise the TSCH network. The TSCH radio 110 will use the broadcasting link and slotframe to broadcast its beacon periodically thus informing the other TSCH radios 112-116 about the existence of the TSCH network. In response to the beacon, TSCH radio 111 requests communication with TSCH radio 110 by sending a communication request to the link layer 110LL (not shown). The 110LL forwards the request to the radio manager which in turn sends back to 110LL the communication parameters for C101 communication. The communication parameters are then send to the TSCH radio 111 requesting communication through application protocol (e.g. CoAP) via the link layer 110LL. The communication parameters include for example initial time slot and frequency band and a hopping number. According to the communication parameters, TSCH radio 110 starts communication with TSCH node 111, i.e. in $2^{nd}$ TSCH timeslot and at $13^{th}$ frequency channel of the first communication cycle as shown in **FIG. 6.** To keep track of current and future TSCH communications, the radio manager reserves in the scheduling matrix the corresponding unit cells for this C101 communication as shown in **FIG. 6.** At the same time, the BLE master link layer 210LL (or BLE controller) keeps scanning its advertising channels for any request for communication by BLE non-collocated radios, e.g. BLE radios 212-213. There are two scenarios for BLE master to receive the first request from BLE slave. In the first scenario, 210LL keeps scanning its primary advertising channels (i.e., channels 37 to 39) to receive the potential BLE directed or undirected advertisement message (i.e. BLE advertisement message). In the second scenario, the BLE master link layer 210LL might receive a connectable ADV_EXT_IND message over primary advertising channels and subsequently the BLE master shall listen for the connectable (directed or undirected) AUX_ADV_IND message over secondary advertising channels (over 37 data channels). The connectable directed AUX_ADV_IND message contains the 210LL device address and is allowed by the BLE master filter policy. In both scenarios, upon reception, the request is forwarded by the link layer 210LL to the radio manager. The radio manager in turn sends communication parameters to link layer 210LL (not shown). The link layer 210LL will then respond by sending a connection request command, CONNECT_IND in first scenario or AUX_CONECT_REQ in second scenario, to BLE slave 211. These two commands both include parameters which determine the start and duration of the communication window and communication period, i.e. the BLE anchor point and BLE connection interval. In the second scenario, the BLE slave sends the AUX_CONNECT_RSP message that contains master and slave addresses on the same secondary advertising channel index to the BLE master. In both scenarios, the BLE master starts the communication window (i.e. the anchor point of the BLE connection event) by sending the first data channel PDU, DATA_CHANNEL_PDU. The next connection event starts from this anchor point.

According to the BLE standard, the first anchor point is determined as follows. First, the radio manager should define the offset between transmission of BLE connection request to the slave and the start of TSCH timeslot. Secondly, the manager need to determine when to set the BLE anchor point. The anchor point is set to be aligned with a start of a TSCH timeslot after certain delay, t2Delay. The t2Delay is equal to time between transmission of connection request to the slave and the anchor point and is calculated based on transmitWindowDelay, transmitWindowOffset and transmitWindowSize of the BLE protocol.

By assuring that sum of the offset and t2Delay is a multiple of unit-cell width, the manager guarantees alignment of the BLE connection interval with TSCH timeslots. The first BLE packet sent in the Connection State by the BLE master determines the anchor point for the first connection event and therefore the timings of all future connection events for this BLE master-slave communication. The anchor point of the subsequent connection events is set to start after the BLE connection interval time (e.g., 10ms) after the first connection event anchor point.

The connection request message (i.e. CONNECT_IND or AUX_CONNECT_REQ) message also includes a channel map and hop number for the non-collocated BLE radios. The channel map indicates used and unused data channels during the upcoming connection events. The hop number indicates the hop increment used in the data channel selection algorithm which has a value in the range of 5 to 16. The radio manager 300 may update the BLE channel map after entering the Connection State. The manager informs the master 210 of the update channel map, which in turn updates the BLE slave channel map by sending to the slave an LL_CHANNEL_MAP_REQ. Similarly, the radio manager may inform the TSCH coordinator 110 to update the channel map of a non-collocated TSCH radio to change the communication of the schedules in the TSCH network.

In BLE protocol, the communication window (i.e. connection event) is typically not specified, so in equation (3), the communication cycle which is always a multiple of 1.25 ms can be used instead. In such case, the Tmin and Fmin can be determined as follows.

$$Fmin = GCD (ch_{BW} BLE, ch_{BW} TSCH, ch_{space} BLE, ch_{space} TSCH, ch_{offset} BLE, ch_{offset} TSCH) =$$

$$Fmin = GCD (2MHz, 2MHz, 0MHz, 3MHz, 0MHz, 3MHz) = 1MHz;$$

$$Tmin = GCD (BLE\ communication\ cycle, TSCH\ communication\ window) =$$

$$Tmin = GCD (n*1.25\ ms, 10\ ms) = 1.25ms$$

The radio manager will then allocate the first TSCH communication starting at unit cell with index i=8-15 and j= 3-4 and a communication cycle equal to 30 ms = 24 * $T_{min}$. And, the subsequently requested BLE communication may start at i = 1-6 and j= 7-8 and has a communication cycle equal to 6*$T_{min}$.

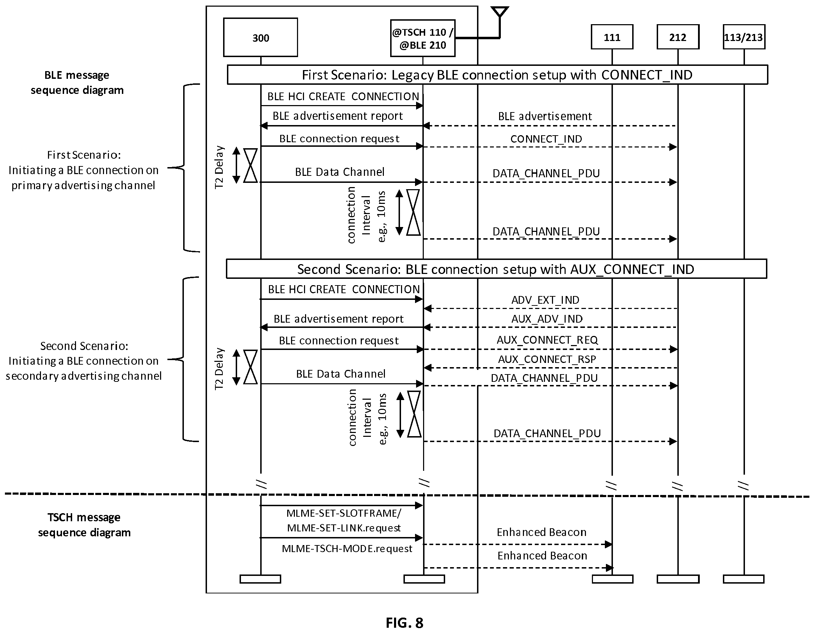

Alternatively, a BLE connection may have started first followed by the start of the TSCH slotframe. In this case, the radio manager aligns the TSCH slotframe with the start of the BLE connection event (i.e. BLE's anchor point). **FIG. 8** shows the message sequence diagram between the radio manager 300 and the collocated radio modules 110 or 210 as well as the message sequence diagram between collocated and non-collocated radios, i.e. radios 111 and 212. The radio manager starts the BLE network. The radio manager in turn sends back to 210LL the communication parameters for BLE communication. The communication parameters are then send to BLE radio 212 requesting communication through connection request message via the link layer 210LL. The communication parameters include for example initial anchor point and frequency band, hopping number. According to the communication parameters, BLE radio 210 starts communication with BLE slave 212. To keep track of current and future communications, the radio manager reserves in the scheduling matrix the corresponding unit cells for this BLE communication. At the same time, the TSCH coordinator link layer 110LL scans all channels and sends channel quality statistics to the radio manager as described previously. Based on the channel quality statistics the radio manager decides which channels are clear to use for communication. The radio manager sets new slotframe and links (e.g., broadcast or unicast) and switches the TSCH radio 110 into TSCH mode with a MLME-TSCH-MODE.request. Upon sending the MLME-TSCH-MODE.request by the TSCH scheduler 3001 to MAC layer 110LL, the first TSCH timeslot will be started in MAC layer 110LL. So, the scheduler chooses an anchor point in BLE and sets the TSCH mode ON by sending the MLME-TSCH-MODE.request to TSCH MAC layer 110LL. Upon reception of this request with TschMode set to ON, the TSCH MAC layer starts operating its state machine using slotframes and links are already received from radio manager. By starting the TSCH state machine, the TSCH timeslots and slotframe will be aligned with the chosen anchor point. Then, the TSCH radio 110 starts to broadcast the Enhanced Beacon (EB) to advertise the TSCH network. The TSCH radio 110 will use the broadcasting link and slotframe to broadcast its beacon periodically thus informing the other TSCH radios 112-116 about the existence of the TSCH network. From this moment, any non-collocated TSCH radio may join the network by sending a join request. After completion of a join association, the radio manager will schedule new communications for those new TSCH radios. The radio manager may use the application protocol (e.g. CoAP) to forward the communication parameters for these new communications.

As another example, the multi-radio 100 may comprise BLE periodic broadcaster in connection less mode and TSCH radio. The BLE broadcaster transmits periodically extended advertisement packets (e.g., AUX_SYNC_IND for periodic advertising) in the secondary advertising channels i.e., same as 37 data channels, as specified in the Bluetooth Core specification. The size of advertisement packets (e.g., AUX_SYNC_IND) can be extended to 255 octets and a number of non-connectable periodic advertisement packets can be used for positioning or tacking services. In primary adverting channels, the 210LL first broadcasts ADV_EXT_IND messages that contain information about the data channel number, timing offset and the BLE Phy (coded or non-coded) of the next AUX_ADV_IND message. Immediately, the AUX_ADV_IND will be sent on that data channel which contains the SyncInfo to calculate the channel hopping and time intervals of coming periodic AUX_SYNC_IND messages. The radio manager uses the Sync Packet Offset field in the SyncInfo field to aligns the start of AUX_SYNC_IND transmission with the TSCH timeslots and it uses the Event Counter field to avoid the collision of AUX_SYNC_IND channel hopping with that of TSCH, in the case that TSCH may have started first. Then, periodic advertising of AUX_SYNC_IND will be started with "Periodic Adverting Interval". The Periodic Adverting Interval is multiple of 1.25 ms in the range of 7.5 ms to 81.91875 s. If the BLE periodic advertisement has started prior the start of the TSCH slotframe, the radio manager aligns the TSCH slotframe with the start of the BLE advertisement transmission. In both scenarios, whether TSCH or BLE starts first, the Tmin and Fmin can be determined

as follows.

$$Fmin = GCD (ch_{BW} BLE, ch_{BW} TSCH, ch_{space} BLE, ch_{space} TSCH, ch_{offset} BLE, ch_{offset} TSCH) =$$

$$Fmin = GCD (2MHz, 2MHz, 0MHz, 3MHz, 0MHz, 3MHz) = 1MHz;$$

$$Tmin = GCD (BLE\ Periodic\ Adverting\ Interval, TSCH\ communication\ window) =$$

$$Tmin = GCD (n*1.25\ ms, 10\ ms) = 1.25ms$$

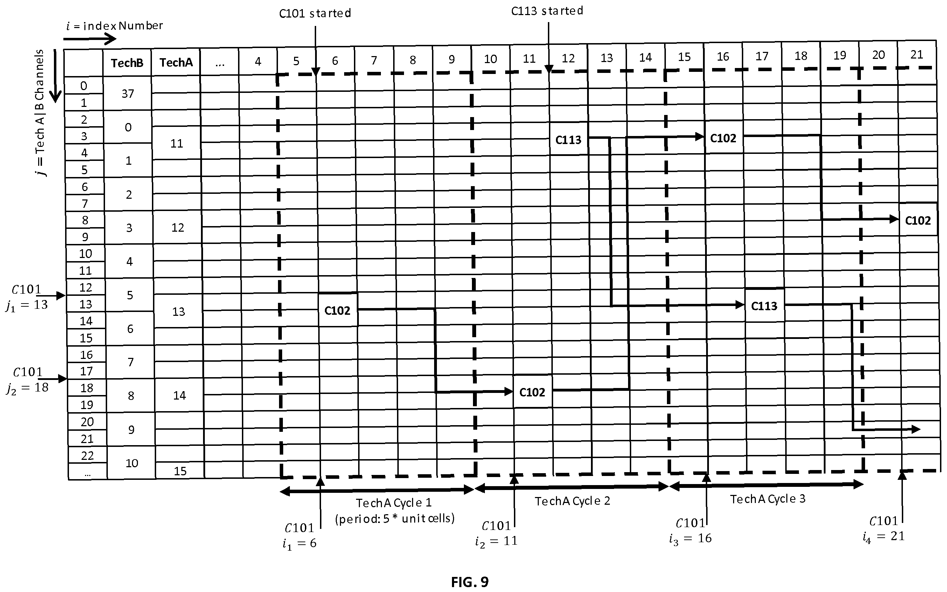

**FIG. 9** shows another example of a scheduling matrix with two scheduled communications both using the same communication protocols, i.e. TSCH. The first communication C102 is between radios 110 and 112 and the second communication C113 between radios 111 and 113. As shown in the figure, the communications are scheduled such that no overlap of slots or channels occurs in the first three communication cycle.

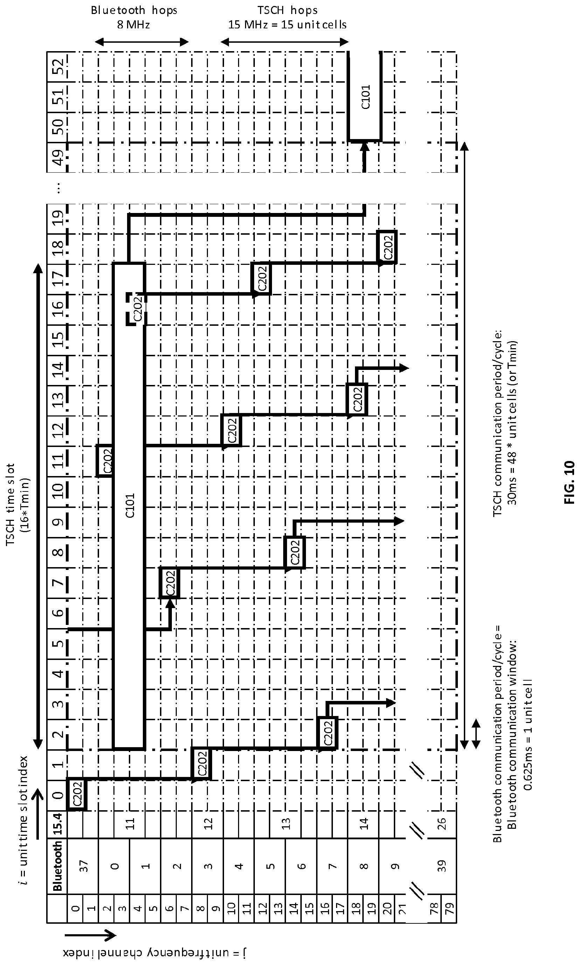

**FIG. 10** shows an example scheduling matrix with two scheduled communications C101 and C202 in the case when the multi-radio comprises classic Bluetooth (BT) and TSCH radios, where communication C101 is between TSCH radios 110 and 111 and C202 between BT radios 210 and 212. In this example, the Bluetooth uses basic piconet physical channels. In the basic piconet physical channels, communication is done at every timeslot and hops in frequency after every timeslot. The Tmin and Fmin can be determined as follows.

$$Fmin = GCD (ch_{BW} BT, ch_{BW} TSCH, ch_{space} BT, ch_{space} TSCH, ch_{offset} BT, ch_{offset} TSCH) =$$

$$Fmin = GCD (1MHz, 2MHz, 0MHz, 3MHz, 0MHz, 3MHz) = 1MHz;$$

$$Tmin = GCD (BT\ communication\ window, TSCH\ communication\ window) =$$

$$Tmin = GCD (0.625ms, 10ms) = 0.625ms$$

As shown in the figure, Bluetooth communication C202 is already started when TSCH communication is requested. The radio manager allocates the first TSCH communication C101 to start at unit cell with index i=2-17 and j= 3-4. Bluetooth communication is predicted to interfere with the TSCH communication at i=16 and j=4. In this scenario, to avoid interference, the radio manager will inform the Bluetooth master (i.e. 210) to skip communication during this timeslot. The Bluetooth will re-start communication at cell i=17 and j=12.

As another example, the multi-radio may comprise deterministic and synchronous multichannel extension (DSME) and TSCH radios. DSME involves periodic transmissions and hops in frequency. In this case, the Tmin and Fmin can be determined as follows.

$$Tmin = GCD (DSME\ communication\ window\ size, TSCH\ communication\ window\ size)$$

$$Tmin = GCD (DSME\ superframe/DSME\ number\ of\ superframe\ slots, TSCH\ communication\ size)$$

$$Tmin = GCD (15.36/16\ ms, 10\ ms) = GCD (0.96\ ms, 10ms) = 80\ \mu s$$

$$Fmin = GCD (ch_{BW} DSME, ch_{BW} TSCH, ch_{space} DSME, ch_{space} TSCH, ch_{offset} DSME, ch_{offset} TSCH)$$

$$Fmin = GCD (2MHz, 2MHz, 3MHz, 3MHz, 3MHz, 3MHz) = 1\ MHz$$

For coexistence, the unit-cell width is 80 us and unit cell height is 1 MHz. The communication window for the TSCH communication will be 125*Tmin, while for DSME communication window is equal to 1*Tmin. The communication frequency band for TSCH and DSME is 2*Fmin.

Reserving unit cells for current and subsequent communication cycles, allows the radio manager to identify the scheduled communications that may not meet the basic requirements of the application, in future cycles. For example, the scheduled communications may overlap partially or fully in time or frequency. For example, it may be that in cycle=3, radio 110 is scheduled to communicate in cells i=13, j=2-3 and radio 210 is scheduled to communication in cells i=13, j=3-4, or when radio 110 is scheduled to communicate in cells i=13-14, j=2-3 and radio 210 is scheduled to communication in cells i=14, j=3-4. Accordingly, the manager 300 identifies such cell(s) as overlapping cell(s). In addition, the manager 300 sends a new communication parameters to one or both radios to reschedule the radios communication for cycle=3 and subsequent cycles and thus avoiding the overlap. For example, the manager may reschedule the communication for radio 210 from cells i=13, j=3-4 or i=14, j=3-4 to cells i=13, j=8-9 or i=14, j=8-9. Other rescheduling options are also possible. The manager is thus able to predict and to mitigate a possible overlapping by rescheduling the communication of either or both radios. For example, the manager 300 may modify one or more, or even all communication parameters for either or both radios.

In addition, to identifying overlapping of scheduled communications, the radio manager, is able to identify the scheduled communications that may not meet the optimum requirements (e.g. reliability or latency) of the application, in future cycles. For example, the scheduled communications are too close to each other and may not be sufficiently spaced apart in time and/or frequency. For example, it may be that in cycle=3, radio 110 is schedule to communicate in cells i=13, j=6-7 and radio 210 is scheduled to communication in cells i=13, j=8-9 then the communications may interfere each other. Another example of too close communication scheduling is if radio 110 is scheduled to communicate in cells i=13, j=6-7 and radio 210 is scheduled to communicate in cells i=14, j=8-9. Accordingly, the manager 300 identifies such cell(s) as interference cell(s) both in time and frequency domain. The radio manager is thus able to predict (identify) in which unit cells interference (too close communications) will occur and to mitigate interference problems by rescheduling the communications. For example, the manager may send new communication parameters to one or both radios so that the latter are scheduled to communicate without interference in cycle=3. The manager 300 may modify one or more, or even all communication parameters for either or both scheduled communications. For example, the manager may reschedule the communication for radio 110 from cells i=13, j=6-7 to cells i=13, j=4-5. Alternatively, it may reschedule the communication for radio 210 from cells i=13, j=8-9 or i=14, j=8-9 to cells i=14, j=13-14. Other rescheduling options are also possible.

The communication parameters for a requested communication are determined by evaluating an objective function. The objective function may be defined to meet the basic requirements and/or optimum requirements to improve reliability or latency by maximizing the frequency distance between two Rx/Tx slots for two radios at one timeslot or by minimizing the time distance between the Rx slot and Tx slot in scheduling matrix, respectively. In addition, the objection function may take into account channel rejection, latency, priority and/or concurrent communication constraints. Conventional algorithms, such as gradient descent, may be used for solving the objective function. In the case, the objective function is defined to meet a number of constraints (also called decision variables), it is advantageous to assign a weight factor to each constraint.

The radio manager 300 can improve the end-to-end latency between respective radios by forwarding the communication traffic via a network path with a lower latency. For example, the radio manager can forward the TSCH communication traffic (e.g. IPv6 or non-IPv6 packets) from a network path with a higher latency (e.g. from radio 110 to radio 113 via radios 111 and 112) to another with a lower latency (e.g. from radio 110 to radio 113 via radio 111). Packet forwarding can be performed using known solutions. Alternatively, latency can be improved by allowing communications during the whole communication cycle. For example, the upward communication between the BLE slave and master may occur at the beginning of this interval at unit slot n=0 (or n=4) at channel m=9 (or m=3). The next downward communication can happen in unit slot n=1 (or n=15) at channel m=14 (or m=16). If the BLE connection interval is 40 ms, then the end-to-end latency will be 20ms.

The radio manager 300 can also improve latency of reception and transmission between two radios 110 and 210. For example, multiple-radio device 100 might need to forward the received communication traffic from one radio (e.g., 110) through another radio 210. Radio manager can improve latency by minimizing the number of timeslots (delay) between reception of packet by radio 110 and transmission of packet through radio 210. For example, the upward communication between the BLE non-collocated radio (slave 211-213) and master 210 may occur at unit slot n=0. The next downward communication can be scheduled in unit slot n=1 through TSCH coordinator to TSCH non-collocated radios 111-116.

The radio manager 300 may be arranged to schedule the communications between collocated and non-collocated radio so that the reliability is improved. In this embodiment, the radio manager will guarantee that communications of two radios are not scheduled concurrently. Based on at least one of overlapping, adjacent and alternate-channel-interference-rejection parameters, the radio manager 300 schedules the concurrent communications either (i) within a same timeslot with enough separation in frequency domain or (ii) avoids scheduling concurrent communication. In the following, we provide an example how to formulate these constraints. If the spacing between the channels of the two communication-links as scheduled is greater than the pre-determined value for Adjacent-Channel-Rejection then the two communication-links can be scheduled during the same or overlapping timeslots. Otherwise, the communication links should be scheduled during nonoverlapping timeslots.

The radio manager may be arranged to guarantee that communications are not scheduled concurrently and/or in adjacent frequency band. Avoiding scheduling of communications in adjacent frequency band, may be advantageously when radios have inefficient guard band separation for the interfering adjacent-, alternate- or co-channels. In such case, the radio manager 300 may be arranged to allocate specific set of frequency channels to one radio module and another set of channels to the other radio. Each set of channels may comprise one or more blocks of unit cells. The different sets of channels have to be disjoint; i.e. their intersection is an empty set. For example, for the TSCH communications unit cells with index j=p $\in$ [1...n] and for the BLE communications unit cells with index j=q $\in$ [1...m], where p$\cap$q = {}. Other combinations of unit cells are also possible.

In addition, the radio manager 300 may monitor the quality of scheduled communications. The radio manager may receive reports (e.g. statistics like RSSI, CCA or LQI) from collocated and/or non-collocated radios within the wireless network which contains information about external interference, i.e. interference from adjacent networks (e.g., CCA statistics) and internal interference, i.e. interference among the radios within the network (e.g., RSSI and LQI). Statistics are typically send over the application protocol (e.g. CoAP or MQTT).

In case of poor connectivity caused by internal interference, the radio manager 300 may be arranged to modify the schedule of the communication(s) with poor quality in accordance with newly derived communication parameters so that the existing poor schedules are replaced with new schedules so that the reliability is improved. In this embodiment, the radio manager can dynamically adapt the existing schedule based on new reports. Then, the radio manager 300 will forward new scheduled/labeled cells to the reporting radio (co-located or non-collocated radios). The radio manager will delete the old poor-quality schedules and add new schedules. If TSCH radios 110/111 were reporting, the radio manager will send MLME-SET-LINK (with DELETE operation flag) command to remove the old link within the link table of located radio 110 and non-collocated radio 111. Then, the radio manager will send MLME-SET-LINK (with ADD operation flag) command to write new link in link tables of both radio 110 and 111. Similarly, if BLE radios 210/112 were reporting, the radio manager will adapt the new schedule by sending LL_CHANNEL_MAP_REQ or LL_CONNECTION_UPDATE commands to both collocated and non-located radios.

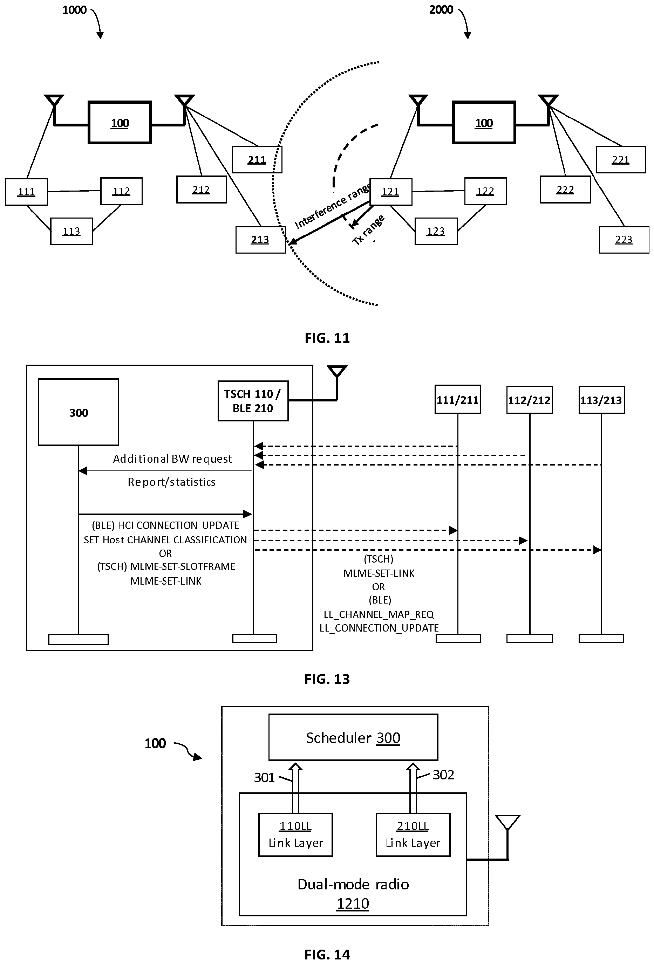

To improve connectivity due to external interference, the radio manager 300 may be arranged to identify the external interference from adjacent wireless network 2000. In this embodiment, the radio manager will guarantee that communications of two networks are not scheduled concurrently. **FIG. 11** is a schematic view of two neighboring wireless networks 1000 and 2000. In this example, external interference may occur between collocated and/or non-collocated device belonging to respective wireless networks 1000 and 2000. For example, as non-collocated radios 211 and 213 of network 1000 are located within the interference range of non-collocated radio 121 of network 2000, the latter will interfere each other. The radio manager may receive clear channel assessment (CCA) statistics from the affected collocated or non-collocated radio. In turn, the manager may decide to disable or to reschedule the communications in network 1000 to avoid external interference. In addition, the manager may blacklist the cells within which external interference is observed to avoid scheduling of communications within these cells.

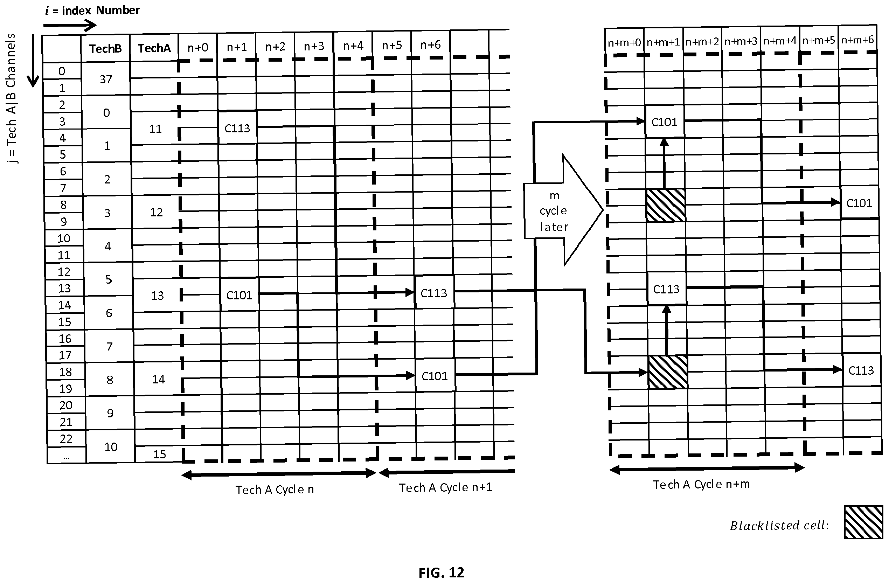

**FIG. 12** shows an example of a scheduling matrix where in cycle = n+m, the communication C101 between radios 110 and 111 and communication C113 between radios 111 and 113 are scheduled in a blacklisted cell(s). Cell(s) maybe blacklisted when interference from a neighboring wireless network is detected. In addition, cell(s) maybe blacklisted for a radio network when specific timeslot(s) or frequency channel(s) are frequently used by other radio networks. In such case, the manager will schedule new communications or reschedule existing communication such that they do not occur in time or frequency range of the blacklisted cell(s). As shown in the figure, communications C101 and C113 are rescheduled in cycle n+m to avoid the blacklisted cell(s).

Thus to avoid a conflict (e.g. a collision) or to meet the application requirements (e.g. end-to-end latency, reliability, etc.), the radio manager may reschedule one or more scheduled communications. The rescheduling of a communication includes modifying one or more communication parameters and/or blocking one or more communications within specific communication cycles. The radio manager must assure that the new communication parameters are received by the respective radios at the latest in the communication cycle preceding the cycle where e.g. the conflict is detected. Upon prediction of the conflict, the new communication parameters may be sent to the respective radios at any subsequent cycle or at any time slot in between the time when conflict was detected and prior the conflict occurrence.

In another embodiment, the radio manager 300 may be arranged to receive from a collocated or a non-collocated radio a request for a new contract or additional bandwidth. Accordingly, the manager may modify the scheduled communications as described above so that the new requests for communication can be scheduled. The radio manager can dynamically adapt the existing schedules. Based on the defined objective function, the radio manager may modify the schedule of existing communication, e.g. will reserve different unit cells for further communications. The radio manager 300 will inform the requesting collocated or non-collocated radio about rescheduling the communications by sending the new (modified) communication parameters. If a BLE slave sends a request for bandwidth, the radio manager will send to BLE radio 210 (or BLE controller) CONNECTION_UPDATE or SET Host CHANNEL CLASSIFICATION commands and accordingly the BLE link layer 210LL will send to BLE slave, CONNECTION_UPDATE and CHANNEL_MAP_REQ messages so that BLE slave schedules its subsequent communications in accordance with the new communication parameters as shown in **FIG. 13.** Similarly, if a non-collocated TSCH radio sends a request for bandwidth, the radio manager will send to it MLME-SET-LINK and MLME-SET-SLOTFRAME commands via TSCH link layer 110LL so that the radio schedules its subsequent communication accordingly.

In another embodiment, the multi-radio comprises a dual-mode radio 1210 as shown in **FIG. 14.** The dual-mode radio 1210 switches operation between two different modes; for example, at one point in time it may operate in compliance with TSCH and in another point in time it may operate in compliance with BLE. In such a scenario, the radio manager 300 is arranged to schedule the communications of the different modes in a non-concurrent fashion (concurrent communications are avoided or forbidden). The radio manager will allocate the BLE and TSCH communications such that the scheduled communications do not overlap in time. For example, for the TSCH communications unit cells with index $i=p \in [1...n]$ and for the BLE communications unit cells with index $i=q \in [1...m]$, where $p \cap q = \{\}$.

The radio manager, may in addition allocate priority to a specific radio module. For example, communication request from radio module 210 may be handled with higher priority than communication request from radio 110. In this case, in addition to other objectives to be met, the objective function will also take into account the priority assigned to the radio modules when scheduling new communications or when rescheduling already allocated communication. Priority can be also assigned in accordance with the first established network.

The multi-radio 100 may function as a router device in a wireless network. The router will thus have capability to schedule communications within the wireless network. In a network comprising multiple router devices, i.e. a large-scale network, the network management can be either centralized or distributed. In a centralized management approach, one of the routers is arranged to manage the scheduling of the communications of the network. Only this router will have the capabilities of scheduling new, deleting and/or rescheduling existing communications. In the distributed approach, some of the routers in the network will have management capabilities over a part of the scheduling matrix, i.e. cells with a specific range of unit slots and/or unit channels. Thus, each of the router will be able to schedule new, delete and/or reschedule existing communications within that range only.

Cooperative coexistence of radio networks sharing the same frequency spectrum is achieved by providing a radio manager which is arranged to exchange usage information (e.g. communication parameters, and pre-set scheduled communications as well as report/statistics) with the collocated and/or non-collocated radios within the network. By mapping the communications to a unit time slot and a unit channel, the radio manager is able to align in time and frequency communications between collocated and non-collocated radios. This allows the manager to track current and future scheduled communications easily, to detect conflicts among scheduled communications and/or to detect whether the application requirements are not met. The radio manager thus has an overall knowledge about the schedule and the quality of the communications in the wireless network as a whole. Based on this knowledge the manager may reschedule communications so that cooperative coexistence is provided.

**Claims**

1. A method for determining communication parameters comprising a time and frequency hopping pattern for a mobile communication device (100) comprising a first radio module (110) communicating with a communication device in compliance with a first protocol, a second radio module (210) communicating with a communication device in compliance with a second protocol, and a radio manager (300), the method comprising:

   - receiving, in the radio manager (300), communication parameters from the first radio module (110);
   - receiving, in the radio manager (300), communication parameters from the second radio module (210);
   - determining a minimum time slot (Tmin) and a minimum frequency band (Fmin) based on the received communication parameters,
   - deriving, in the radio manager (300), communication parameters for a communication requested from the at least one of the radio modules based on the communication parameters of the radio module requesting communication and the determined minimum time slot (Tmin) and the minimum frequency band (Fmin), and
   - forwarding, by the radio manager (300), the derived communication parameters to the radio module requesting communication.

2. The method according to claim 1, wherein derived communication parameters comprise channel hopping pattern and communication period.

3. The method according to claim 2, wherein the minimum time slot (Tmin) is derived based on a greatest common divisor, GCD, of the communication window or the communication interval of the received communication parameters, and the minimum frequency band (Fmin) is derived based on a greatest common divisor, GCD, of the frequency band, number of channels, channel bandwidth or channel offset of the received communication parameters.

4. The method according to claim 3, wherein the step of determining, further comprises creating a scheduling matrix with a unit cell having a unit width (Wo) equal to minimum time slot (Tmin) and a unit height (Ho) equal to minimum frequency band (Fmin).

5. The method according to claim 4, wherein the communication parameters of the requested communication are recorded in the scheduling matrix by allocating corresponding unit cells as communication slots for the radio module requesting communication.

6. The method according to any of claims 4 or 5, wherein the step of determining, further comprises labelling a unit cell as an overlapping cell, if communications of the radio modules are to overlap or are to interfere within a unit cell's corresponding time slot and frequency band and to adjust the communication parameters or to disable communication via one or both radio modules.

7. The method according to any preceding claims, wherein the step of deriving communication parameters comprises evaluating an objective function, wherein the objection function takes into account a channel rejection, reliability, a latency and/or a concurrent communication constraints.

8. The method according to claim 7, wherein the objective function takes into account the radio modules priority.

9. The method according to claims 7 or 8, wherein objective function takes into account statistics information derived based on monitoring one or more communications via one or both radio modules.

10. The method according to any preceding claims, wherein the first and second radio operate in the 2.4 GHz ISM band, 5GHz ISM band or sub-IGHz ISM band.

11. The method according to any preceding claims, wherein either or both the first and second protocols are compliant with Time Synchronized Channel Hopping, TSCH, OSME, WirelessHART, ISA 100.11a, Bluetooth and Bluetooth Low Energy, BLE.

12. A computer program product comprising a computer-executable instructions for performing the method according to any of claims 1 to 11 when the program is run on a computer.

13. A computer readable storage medium comprising the computer program product according to claim 12.

14. A radio manager (300) for a mobile communication device (100) comprising a first radio module (110) communicating with a communication device in compliance with a first protocol, a second radio module (210) communication with a communication device in compliance with a second protocol, wherein the radio manager (300) is arranged to perform the method according to any of claims 1 to 11.

15. A mobile communication device (100) comprising a first radio module (110) communicating with a communication device in compliance with a first protocol, a second radio module (210) communication with a communication device in compliance with a second protocol, and a radio manager (300) as in claim 14.

**Patentansprüche**

1. Verfahren zum Bestimmen von Kommunikationsparametern, ein Zeit- und Frequenzsprungmuster für eine mobile Kommunikationsvorrichtung (100) umfassend, die ein erstes Funkmodul (110) umfasst, das mit einer Kommunikationsvorrichtung in Übereinstimmung mit einem ersten Protokoll kommuniziert, ein zweites Funkmodul (210), das mit einer Kommunikationsvorrichtung in Übereinstimmung mit einem zweiten Protokoll kommuniziert, und einen Funkmanager (300), wobei das Verfahren umfasst:

   - Empfangen, in dem Funkmanager (300), von Kommunikationsparametern von dem ersten Funkmodul (110);

- Empfangen, in dem Funkmanager (300), von Kommunikationsparametern von dem zweiten Funkmodul (210);
- Bestimmen eines minimalen Zeitschlitzes (Tmin) und eines minimalen Frequenzbandes (Fmin) auf Grundlage der empfangenen Kommunikationsparameter,
- Ableiten, in dem Funkmanager (300), von Kommunikationsparametern für eine Kommunikation, die von dem mindestens einen der Funkmodule angefordert wird, auf Grundlage der Kommunikationsparameter des Funkmoduls, das Kommunikation anfordert, und dem bestimmten minimalen Zeitschlitz (Tmin) und dem minimalen Frequenzband (Fmin), und
- Weiterleiten, durch den Funkmanager (300), der abgeleiteten Kommunikationsparameter an das Funkmodul, das Kommunikation anfordert.

2.  Verfahren nach Anspruch 1, wobei abgeleitete Kommunikationsparameter ein Kanalsprungmuster und eine Kommunikationsperiode umfassen.

3.  Verfahren nach Anspruch 2, wobei der minimale Zeitschlitz (Tmin) auf Grundlage eines größten gemeinsamen Teilers (Greatest Common Divisor; GCD) des Kommunikationsfensters oder dem Kommunikationsintervall der empfangenen Kommunikationsparameter abgeleitet wird, und das minimale Frequenzband (Fmin) auf Grundlage eines größten gemeinsamen Teilers, GCD, des Frequenzbandes, der Anzahl von Kanälen, der Kanalbandbreite oder dem Kanalversatz der empfangenen Kommunikationsparameter abgeleitet wird.

4.  Verfahren nach Anspruch 3, wobei der Schritt des Bestimmens weiter Erzeugen einer Planungsmatrix mit einer Einheitszelle mit einer Einheitsbreite (Wo), die dem minimalen Zeitschlitz (Tmin) gleich ist, und einer Einheitshöhe (Ho), die dem minimalen Frequenzband (Fmin) gleich ist, umfasst.

5.  Verfahren nach Anspruch 4, wobei die Kommunikationsparameter der angeforderten Kommunikation in der Planungsmatrix durch Zuweisen entsprechender Einheitszellen als Kommunikationsschlitze für das Funkmodul, das Kommunikation anfordert, aufgezeichnet werden.

6.  Verfahren nach einem der Ansprüche 4 oder 5, wobei der Schritt des Bestimmens weiter Markieren einer Einheitszelle als eine überlappende Zelle umfasst, wenn Kommunikationen der Funkmodule innerhalb eines entsprechenden Zeitschlitzes und eines Frequenzbandes einer Einheitszelle überlappen oder stören sollen, und Einstellen der Kommunikationsparameter oder Deaktivieren von Kommunikation über ein oder beide Funkmodule.

7.  Verfahren nach einem der vorstehenden Ansprüche, wobei der Schritt des Ableitens von Kommunikationsparametern Bewerten einer objektiven Funktion umfasst, wobei die objektive Funktion eine Kanalablehnung, Zuverlässigkeit, eine Latenz und/oder gleichzeitige Kommunikationsbeschränkungen berücksichtigt.

8.  Verfahren nach Anspruch 7, wobei die objektive Funktion die Priorität der Funkmodule berücksichtigt.

9.  Verfahren nach Anspruch 7 oder 8, wobei die objektive Funktion statistische Informationen berücksichtigt, die auf Grundlage von Überwachung von einer oder mehreren Kommunikationen über eine oder beide Funkmodule abgeleitet wurden.

10.  Verfahren nach einem der vorstehenden Ansprüche, wobei der erste und zweite Funk in dem 2,4 GHz ISM-Band, 5 GHz ISM-Band oder Sub-1GHz ISM-Band arbeiten.

11.  Verfahren nach einem der vorstehenden Ansprüche, wobei entweder das erste oder das zweite Protokoll oder beide mit Time Synchronized Channel Hopping, TSCH, DSME, WirelessHART, ISA 100.11a, Bluetooth und Bluetooth Low Energy, BLE, konform sind.

12.  Computerprogrammprodukt, computerausführbare Anweisungen zum Durchführen des Verfahrens nach einem der Ansprüche 1 bis 11, wenn das Programm auf einem Computer ausgeführt wird, umfassend.

13.  Computerlesbares Speichermedium, das Computerprogrammprodukt nach Anspruch 12 umfassend.

14.  Funkmanager (300) für eine mobile Kommunikationsvorrichtung (100), ein erstes Funkmodul (110) umfassend, das mit einer Kommunikationsvorrichtung in Übereinstimmung mit einem ersten Protokoll kommuniziert, ein zweites Funkmodul (210), das mit einer Kommunikationsvorrichtung in Übereinstimmung mit einem zweiten Protokoll kommuniziert, wobei der Funkmanager (300) angeordnet ist, um das Verfahren nach einem der Ansprüche 1 bis 11 durchzuführen.

15. Mobile Kommunikationsvorrichtung (100), die ein erstes Funkmodul (110) umfasst, das mit einer Kommunikationsvorrichtung in Übereinstimmung mit einem ersten Protokoll kommuniziert, ein zweites Funkmodul (210), das mit einer Kommunikationsvorrichtung in Übereinstimmung mit einem zweiten Protokoll kommuniziert, und einen Funkmanager (300) nach Anspruch 14.

**Revendications**

1. Procédé pour déterminer des paramètres de communication comprenant un motif de saut de fréquence et de temps pour un dispositif de communication mobile (100) comprenant un premier module radio (110) communiquant avec un dispositif de communication conformément à un premier protocole, un second module radio (210) communiquant avec un dispositif de communication conformément à un second protocole, et un gestionnaire radio (300), le procédé comprenant les étapes consistant à :

   - recevoir, dans le gestionnaire radio (300), des paramètres de communication du premier module radio (110) ;
   - recevoir, dans le gestionnaire radio (300), des paramètres de communication du second module radio (210) ;
   - déterminer un créneau temporel minimum (Tmin) et une bande de fréquences minimum (Fmin) sur la base des paramètres de communication reçus,
   - obtenir, dans le gestionnaire radio (300), des paramètres de communication pour une communication demandée par l'au moins un des modules radio sur la base des paramètres de communication du module radio demandant la communication et du créneau temporel minimum (Tmin) et de la bande de fréquences minimum (Fmin) déterminés, et
   - transférer, par le gestionnaire radio (300), les paramètres de communication obtenus au module radio demandant la communication.

2. Procédé selon la revendication 1, dans lequel des paramètres de communication obtenus comprennent un motif de saut de canal et une période de communication.

3. Procédé selon la revendication 2, dans lequel le créneau temporel minimum (Tmin) est obtenu sur la base d'un plus grand commun diviseur, PGCD, de la fenêtre de communication ou de l'intervalle de communication des paramètres de communication reçus, et la bande de fréquences minimum (Fmin) est obtenue sur la base d'un plus grand commun diviseur, PGCD, de la bande de fréquences, du nombre de canaux, de la largeur de bande de canal ou de la compensation de canal des paramètres de communication reçus.

4. Procédé selon la revendication 3, dans lequel l'étape consistant à déterminer comprend en outre l'étape consistant à créer une matrice de programmation avec une cellule unitaire présentant une largeur d'unité (Wo) égale à un créneau temporel minimum (Tmin) et une hauteur d'unité (Ho) égale à une bande de fréquences minimum (Fmin).

5. Procédé selon la revendication 4, dans lequel les paramètres de communication de la communication demandée sont enregistrés dans la matrice de programmation en attribuant des cellules unitaires correspondantes en tant que créneaux de communication pour le module radio demandant la communication.

6. Procédé selon l'une quelconque des revendications 4 ou 5, dans lequel l'étape consistant à déterminer comprend en outre l'étape consistant à marquer une cellule unitaire comme une cellule chevauchante, si des communications des modules radio doivent chevaucher ou doivent interférer dans un créneau temporel et une bande de fréquences correspondants d'une cellule unitaire et ajuster les paramètres de communication ou désactiver la communication par l'intermédiaire d'un ou des deux modules radio.

7. Procédé selon l'une quelconque des revendications précédentes, dans lequel l'étape consistant à obtenir des paramètres de communication comprend l'étape consistant à évaluer une fonction objective, dans lequel la fonction objective prend en compte un rejet de canal, une fiabilité, une latence et/ou des contraintes de communication simultanée.

8. Procédé selon la revendication 7, dans lequel la fonction objective prend en compte la priorité de modules radio.

9. Procédé selon les revendications 7 ou 8, dans lequel la fonction objective prend en compte des informations de

**EP 3 493 635 B1**

statistiques obtenues sur la base d'une surveillance d'une ou plusieurs communications par l'intermédiaire d'un ou des deux modules radio.

10. Procédé selon l'une quelconque des revendications précédentes, dans lequel les première et seconde radios fonctionnent dans la bande ISM de 2,4 GHz, dans la bande ISM de 5 GHz ou dans la sous-bande ISM de 1 GHz.

11. Procédé selon l'une quelconque des revendications précédentes, dans lequel l'un ou l'autre ou les deux parmi les premier et second protocoles sont conformes au Saut de canal synchronisé dans le temps, TSCH, au DSME, au WirelessHART, à l'ISA 100.11a, au Bluetooth et au Bluetooth à basse consommation, BLE.

12. Produit de programme informatique comprenant des instructions exécutables sur ordinateur pour effectuer le procédé selon l'une quelconque des revendications 1 à 11 lorsque le programme est exécuté sur un ordinateur.

13. Support de stockage lisible par ordinateur comprenant le produit de programme informatique selon la revendication 12.

14. Gestionnaire radio (300) pour un dispositif de communication mobile (100) comprenant un premier module radio (110) communiquant avec un dispositif de communication conformément à un premier protocole, un second module radio (210) communiquant avec un dispositif de communication conformément à un second protocole, dans lequel le gestionnaire radio (300) est agencé pour effectuer le procédé selon l'une quelconque des revendications 1 à 11.

15. Dispositif de communication mobile (100) comprenant un premier module radio (110) communiquant avec un dispositif de communication conformément à un premier protocole, un second module radio (210) communiquant avec un dispositif de communication conformément à un second protocole, et un gestionnaire radio (300) selon la revendication 14.

100

Scheduler 300

301

302

Radio 1
110

Radio 2
210

**FIG. 1**

100

Scheduler 300

301

302

303

Radio 1
110

Radio 2
210

Radio 3
310

**FIG. 2**

100

300

3001
Scheduler

3002
Scheduler

301

302

112

111

113

114

115

116

110LL
Link Layer

210LL
Link Layer

PHY Layer

PHY Layer

211

212

213

**FIG. 3**

*i* = TSCH slots

*n* = unit slots

TSCH started

TSCH time slot
(1 * Tmin)

*j* = TSCH channels

*m* = unit channels

TSCH
freq. channel
(2 * Fmin)

| TSCH | ... | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|

Rows: 0, 1, 2, 3, 4 (TSCH 11), 5, 6, 7, 8, 9 (TSCH 12), 10, 11, 12, 13, 14 (TSCH 13), 15, 16, 17, 18, 19 (TSCH 14), 20, 21, 22, ..., ... (TSCH 15, ...)

C101   C101   C101

TSCH Cycle 1
(5 * Tmin)

TSCH Cycle 2

**FIG. 4**

*i* = BLE slots

*n* = unit slots

*j* = BLE channels

*m* = unit channels

BLE started

BLE connection event (0.5 * Tmin)

BLE freq. channel (2*Fmin)

| | BLE | ... | 8 | 9 | 10 | 11 | 12 | 13 | 14 | 15 | 16 | 17 | 18 | 19 | 20 | 21 |
|---|---|---|---|---|---|---|---|---|---|---|---|---|---|---|---|---|
| 0 | 37 | | | | | | | | | | | | | | | |
| 1 | | | | | | | | | | | | | | | | |
| 2 | 0 | | | | | | | | C201 | | | | | | | |
| 3 | | | | | | | | | | | | | | | | |
| 4 | 1 | | | | | | | | | | | | | | | |
| 5 | | | | | | | | | | | | | | | | |
| 6 | 2 | | | | | | | | | | | | | | | |
| 7 | | | | | | | | | | | | | | | | |
| 8 | 3 | | | | | | | | | | | | | | | |
| 9 | | | | | | | | | | | | | | | | |
| 10 | 4 | | | | | | | | | | | | | | | |
| 11 | | | | | | | | | | | | | | | | |
| 12 | 5 | | | | | | | | | | C201 | | | | | |
| 13 | | | | | | | | | | | | | | | | |
| 14 | 6 | | | | | | | | | | | | | | | |
| 15 | | | | | | | | | | | | | | | | |
| 16 | 7 | | | | | | | | | | | | | | | |
| 17 | | | | | | | | | | | | | | | | |
| 18 | 8 | | | | | | | | | | | | | | | |
| 19 | | | | | | | | | | | | | | | | |
| 20 | 9 | | | | | | | | | | | | | | | |
| 21 | | | | | | | | | | | | | | | | |
| 22 | 10 | | | | | | | | | | | | | C201 | | |
| ... | | | | | | | | | | | | | | | | |

BLE Cycle 1 (3 * Tmin)

BLE Cycle 2

**FIG. 5**

FIG. 6

EP 3 493 635 B1

**TSCH message sequence diagram**

| | @TSCH 110 / @BLE 210 | | 111 | 212 | 113/213 |

300

MLME-SET-SLOTFRAME/
MLME-SET-LINK.request

MLME-TSCH-MODE.request

Enhanced Beacon

Enhanced Beacon

**BLE message sequence diagram**

First Scenario: Legacy BLE connection setup with CONNECT_IND

**First Scenario:**
**Initiating a BLE connection on primary advertising channel**

BLE HCI CREATE CONNECTION

BLE advertisement report — BLE advertisement

BLE connection request — CONNECT_IND

T2 Delay

BLE Data Channel — DATA_CHANNEL_PDU

connection Interval e.g., 10ms

DATA_CHANNEL_PDU

Second Scenario: BLE connection setup with AUX_CONNECT_IND

**Second Scenario:**
**Initiating a BLE connection on secondary advertising channel**

BLE HCI CREATE CONNECTION

ADV_EXT_IND

BLE advertisement report — AUX_ADV_IND

BLE connection request — AUX_CONNECT_REQ

T2 Delay

AUX_CONNECT_RSP

BLE Data Channel — DATA_CHANNEL_PDU

connection Interval e.g., 10ms

DATA_CHANNEL_PDU

**FIG. 7**

**FIG. 8**

FIG. 9

FIG. 10

*i* = index Number

j = Tech A|B Channels

| | TechB | TechA | n+0 | n+1 | n+2 | n+3 | n+4 | n+5 | n+6 | |
|---|---|---|---|---|---|---|---|---|---|---|
| 0 | 37 | | | | | | | | | |
| 1 | | | | | | | | | | |
| 2 | 0 | | | | | | | | | |
| 3 | | 11 | | C113 | | | | | | |
| 4 | 1 | | | | | | | | | |
| 5 | | | | | | | | | | |
| 6 | 2 | | | | | | | | | |
| 7 | | | | | | | | | | |
| 8 | 3 | 12 | | | | | | | | |
| 9 | | | | | | | | | | |
| 10 | 4 | | | | | | | | | |
| 11 | | | | | | | | | | |
| 12 | 5 | | | | | | | | | |
| 13 | | 13 | | C101 | | | | C113 | | |
| 14 | 6 | | | | | | | | | |
| 15 | | | | | | | | | | |
| 16 | 7 | | | | | | | | | |
| 17 | | | | | | | | | | |
| 18 | 8 | 14 | | | | | C101 | | | |
| 19 | | | | | | | | | | |
| 20 | 9 | | | | | | | | | |
| 21 | | | | | | | | | | |
| 22 | 10 | | | | | | | | | |
| ... | | 15 | | | | | | | | |

m cycle later

| n+m+0 | n+m+1 | n+m+2 | n+m+3 | n+m+4 | n+m+5 | n+m+6 |
|---|---|---|---|---|---|---|

C101

C101

C113

C113

Tech A Cycle n

Tech A Cycle n+1

Tech A Cycle n+m

Blacklisted cell:

**FIG. 12**

EP 3 493 635 B1

1000

2000

Interference range

Tx range

**FIG. 11**

300

TSCH 110 / BLE 210

111/211

112/212

113/213

Additional BW request

Report/statistics

(BLE) HCI CONNECTION UPDATE
SET Host CHANNEL CLASSIFICATION
OR
(TSCH) MLME-SET-SLOTFRAME
MLME-SET-LINK

(TSCH)
MLME-SET-LINK
OR
(BLE)
LL_CHANNEL_MAP_REQ
LL_CONNECTION_UPDATE

**FIG. 13**

100

Scheduler 300

301

302

110LL
Link Layer

210LL
Link Layer

Dual-mode radio
1210

**FIG. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100120362 A1

- US 20100322287 A1

**Non-patent literature cited in the description**

- **CARHACIOGLU et al.** their publication Time-Domain Cooperative Coexistence of BLE and IEEE 802.15.4 Networks. *the IEEE 28th Annual Symposium PIMRC*